(19)

Europäisches Patentamt
European Patent Office
Office européen des brevets

(11) **EP 2 604 467 A2**

(12) **EUROPEAN PATENT APPLICATION**

(43) Date of publication:
**19.06.2013 Bulletin 2013/25**

(51) Int Cl.:
***B60L 9/00*** *(2006.01)*

(21) Application number: **12162398.7**

(22) Date of filing: **30.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.12.2011 KR 20110132708**

(71) Applicant: **Woojin Industrial Systems Co., Ltd.**
**Chungcheongbuk-do 367-822 (KR)**

(72) Inventors:
• **Lee, Eun-Kyu**
**360-210 Chungcheongbuk-do, (KR)**
• **Kim, Tae-Suk**
**361-752 Chungcheongbuk-do (KR)**
• **Kwon, Kyoung-Min**
**368-910 Chungcheongbuk-do (KR)**

(74) Representative: **Gervasi, Gemma**
**Notarbartolo & Gervasi S.p.A.**
**Corso di Porta Vittoria 9**
**20122 Milano (IT)**

(54) **Automatic tuning method for energy storage system for railway trains**

(57)     An automatic tuning method based on an energy storage system for railway trains is provided. In the method, optimal tracking of changes in overhead line voltage, which varies with time and according to substation voltage variation and a train operation pattern, is automatically performed to maximize energy storage efficiency. It is possible to achieve optimal energy saving effects using a bidirectional DC/DC converter which can efficiently use regenerative energy of DC urban railways and can accomplish stabilization of overhead line voltage. In addition, energy efficiency is maximized by charging and discharging energy while tracking unstable power, which is generated using renewable energy such as wind and solar energy, in real time by applying an automatic tuning algorithm to an energy storage system which is applied to a smart grid or a micro grid that uses renewable energy as a primary energy source.

Fig. 3

EP 2 604 467 A2

**Description**

BACKGROUND OF THE INVENTION

Field of the Invention

The present invention relates to an automatic tuning method based on an energy storage system for railway trains, and more particularly to an automatic tuning method based on an energy storage system for railway trains, wherein optimal tracking of changes in overhead line voltage, which varies with time and according to substation voltage variation and a train operation pattern, is automatically performed to maximize energy storage efficiency.

Description of the Related Art

As is well known, worldwide climate change is resulting in environmental destruction and high oil prices and is also resulting in natural resource depletion. As fossil energy depletion and environmental pollution have accelerated, the Kyoto protocol was established to prevent global warming, and development of renewable energy to reduce $CO_2$ emissions has emerged as an urgent issue.

Under such circumstances, technology development has focused upon development of renewable energy using natural resources such as wind, tide, solar, or water energy. However, technology has also been intensively developed to improve conventional energy generation and storage systems or apparatuses, which have a certain rate of loss, to minimize the loss rate.

Some recent subway trains employ a regenerative braking system to save energy. When a subway train decelerates, the regenerative braking system converts kinetic energy of the subway train into electrical energy and collects the converted electrical energy. The regenerative braking system can not only reduce overall power consumption of the system but can also prevent noise generation by mechanical brakes and wear of brake shoes. Regenerative braking systems have been increasingly adopted due to such advantages.

However, when an accelerated train decelerates in a regenerative braking manner in order to stop, the train generates high voltage (i.e., high regenerative power) since a motor of the train operates as a generator to perform regenerative braking. Such regenerated power instantaneously applies high voltage to the overhead line, causing variation in overhead line voltage. This may not only make the system unstable but may also cause a malfunction of a subsequent train when the subsequent train cannot deal with such a high voltage.

Charge and discharge levels of the energy storage system serve as important factors to efficiently utilize regenerative energy. However, it is difficult to efficiently utilize the system due to changes in overhead line voltage according to train operation and changes in subway substation output voltage.

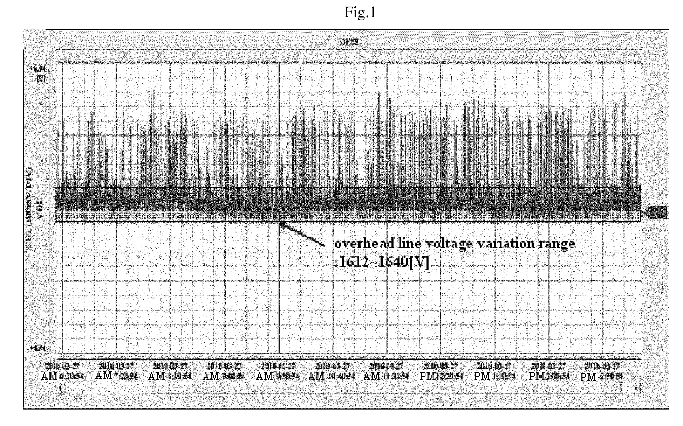

Overhead line voltage variation of a conventional DC subway substation is described in more details with reference to FIG. 1.

A substation facility provided in a power supply system of a DC subway substation includes a 2500kW 12-pulse rectifier which has a function to convert AC power to DC power. The following Table 1 shows rectifier rating of a substation facility.

[Table 1]

| List | Voltage |
|---|---|
| Rated DC voltage | 1500V |
| Secondary voltage of transformer for rectifier | 600V |
| Voltage coefficient of 3-phase full-wave rectifier | 1.35 |
| Secondary Voltage of rectifier | 810V |
| Secondary voltage of 12-pulse rectifier | 1620V |

From overhead line variation of a DC substation in Table 1, it can be seen that variation in overhead line power generated by a transformer and a rectifier in a DC subway substation system is determined by variation in power supplied by Korea Electric Power Corporation (KEPCO). Up to 3% variation in power supplied by KEPCO is permitted. Actual measurement results showed that overhead line voltage of the output side of the rectifier varies within a range of 1612V to 1640V centering on 1625V without any uniform pattern.

FIG. 1 illustrates measurement results of a source line at the output side of the rectifier using a DCPT when a train runs. From thick measurement outlines in FIG. 1, it can be seen that overhead line voltage fluctuates regardless of operation of the train. Here, measured voltages peak upon powering up and regenerative braking of the train.

Under the assumption that the overhead line voltage is constant, a general energy storage system is set to perform charge or discharge when measured voltage is higher or less than the overhead line voltage by a predetermined level. However, it is very difficult to set a discharge start voltage, at which the energy storage apparatus begins to perform discharge, to a specific level in a current environment in which a reduction in overhead line voltage when powering up the train is very small as substation facility capacity has increased.

In addition, while voltage reduction when powering up the train is 15V, the overhead line voltage changes by more than 30V, which may hinder smooth charge and discharge of the energy storage apparatus. Therefore, there is a need to change charge and discharge start voltages and charge and discharge maintenance voltages of the energy storage apparatus according to variation in the overhead line voltage. However, it is very difficult to track (or determine) overhead line voltage changes since the overhead line voltage does not vary in a specific pattern based on time or train operation.

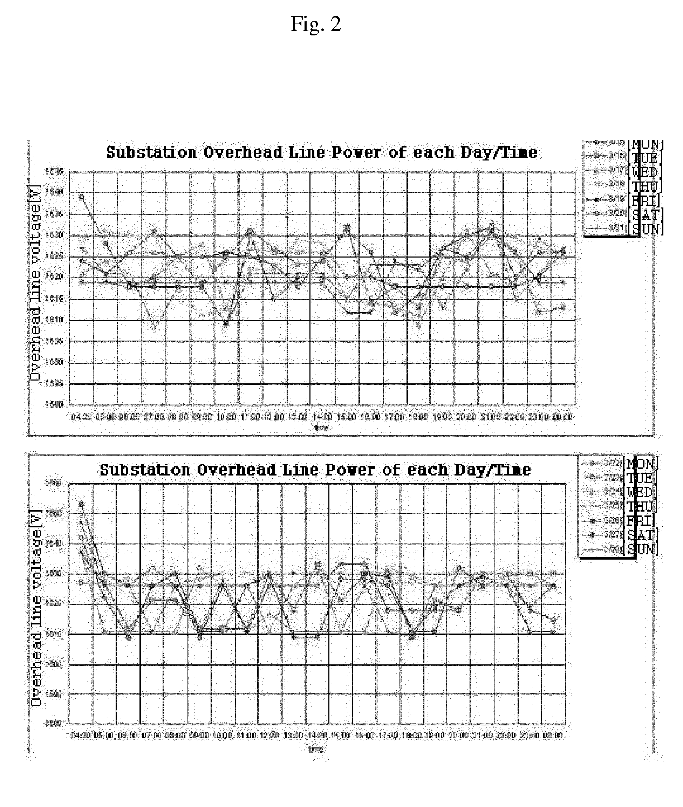

Overhead line voltage varies not only according to substation voltage variation or operation pattern variation but also according to time. 22.9kV power received from a KEPCO power distribution line is supplied as overhead line power via a 12-phase transformer and rectifier. The 22.9kV power is supplied with a variation of 3%, which exerts an influence upon DC overhead line power of the substation. Therefore, there is a need to appropriately compensate for such overhead line power variation. FIG. 2 shows results of normalization of each time zone of data measured in Daedong substation of Daejeon urban railway Line 1. As shown in FIG. 2, overhead line voltage varies in a range of about 1610V to 1630V.

Similarly, such power variation also makes it very difficult to track (or determine) overhead line voltage changes to increase efficiency of the energy storage system.

## SUMMARY OF THE INVENTION

Therefore, the present invention has been made in view of the above problems, and it is an object of the present invention to provide an automatic tuning method based on an energy storage system for railway trains, wherein optimal tracking of changes in overhead line voltage, which varies with time and according to substation voltage variation and a train operation pattern, is automatically performed to maximize energy storage efficiency.

In accordance with the present invention, the above and other objects can be accomplished by the provision of an automatic tuning method based on an energy storage system for railway trains, the automatic tuning method including a first process in which an energy storage apparatus for railway trains starts operation, a second process in which initial charging of supercapacitors in the energy storage apparatus is completed and a power mode is activated, a third process in which one of a charge mode or a discharge mode is selected, a fourth process in which a power charge or discharge mode is initiated or the energy storage apparatus stops operation, a fifth process in which whether or not a condition for switching between the charge and discharge modes is satisfied is determined, a sixth process in which the charge and discharge modes are switched upon determining that the condition for switching between the charge and discharge modes is satisfied, a seventh process in which whether or not a condition for voltage maintenance or automatic tuning is satisfied is determined, and an eighth process in which a process for voltage maintenance or automatic tuning is performed.

Preferably, the third process includes a process in which the energy storage apparatus stops operation when power supply voltage is lower or higher than a charge start voltage, a process in which whether or not the power supply voltage is higher than the charge start voltage is determined, a process in which power-mode charging is initiated when the power supply voltage is higher than the charge start voltage, a process in which whether or not the power supply voltage is higher than a discharge start voltage is determined, and a process in which power-mode discharge is initiated when the power supply voltage is higher than the discharge start voltage.

Preferably, the fourth process further includes a process in which whether or not a supercapacitor charge or discharge voltage is higher than a charge or discharge limit voltage is determined, and a process in which system charge or discharge is blocked when the supercapacitor charge or discharge voltage is higher than the charge or discharge limit voltage.

Preferably, the fifth process includes switching from a current mode to the discharge mode when a discharge start operation time in the charge mode is longer than 10s, and switching from the current mode to the charge mode when a charge start operation time in the discharge mode is shorter than 10s.

Preferably, the seventh process includes a process in which whether or not an actual discharge start voltage in the charge mode is greater than or equal to a discharge limit voltage for automatic level tuning is determined, and a process in which whether or not an actual charge start voltage in the discharge mode is greater than or equal to a charge limit voltage for automatic level tuning is determined.

Preferably, the eighth process includes a process in which the actual discharge start voltage is set as a discharge limit voltage for automatic level tuning when the actual discharge start voltage in the charge mode is greater than or equal to the discharge limit voltage for automatic level tuning, a process in which the discharge start voltage is updated to a higher level when the actual discharge start voltage is less than the discharge limit voltage for automatic level tuning, a process in which the actual charge start voltage is set as a charge limit voltage for automatic level tuning when the actual charge start voltage in the discharge mode is less than or equal to the charge limit voltage for automatic level tuning, and a process in which the discharge start voltage is updated to a lower level when the actual charge start voltage is higher than the charge limit voltage for automatic level tuning.

The automatic tuning method based on the energy storage system for railway trains according to the present invention has a variety of advantages. For example, it is possible to achieve optimal energy saving effects using a bidirectional DC/DC converter which can efficiently use regenerative energy of DC urban railways and can accomplish stabilization of overhead line voltage. In addition, energy efficiency is maximized by charging and discharging energy while tracking unstable power, which is generated using renewable energy such as wind and solar energy, in real time by applying an automatic tuning algorithm to an energy storage system which is applied to a smart grid or a micro grid that uses renewable energy as a primary energy source.

BRIEF DESCRIPTION OF THE DRAWINGS

The above and other objects, features and other advantages of the present invention will be more clearly understood from the following detailed description taken in conjunction with the accompanying drawings, in which:

FIG. 1 illustrates changes in overhead line voltage when a conventional energy storage system is used;
FIG. 2 illustrates changes in overhead line voltage with time when a conventional energy storage system is used;
FIG. 3 is a circuit diagram of an energy storage apparatus for railway trains according to an embodiment of the present invention;
FIG. 4 illustrates a simplified configuration of a power mode controller which is applied to an energy storage system for railway trains according to an embodiment of the present invention;
FIG. 5 is a flowchart illustrating automatic tuning based on the energy storage system for railway trains according to an embodiment of the present invention;
FIG. 6 is an operation test diagram illustrating an over-discharge state when automatic tuning based on the energy storage system for railway trains according to an embodiment of the present invention is not applied;
FIG. 7 is an operation test diagram illustrating over-charge state when automatic tuning based on the energy storage system for railway trains according to an embodiment of the present invention is not applied; and
FIG. 8 is a test diagram illustrating operation states when automatic tuning based on the energy storage system for railway trains according to an embodiment of the present invention is applied.

DETAILED DESCRIPTION OF THE INVENTION

Embodiments of the present invention will now be described in detail with reference to the drawings.

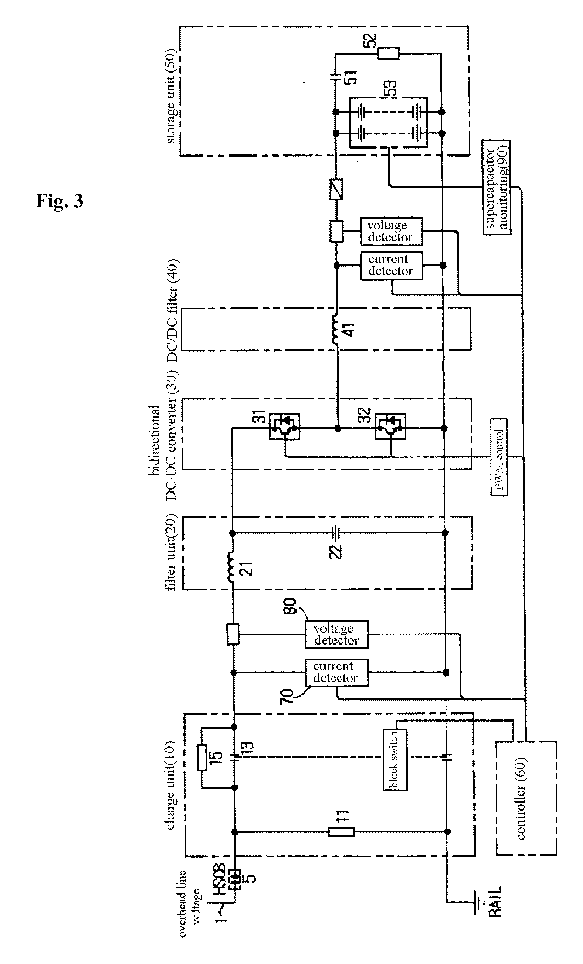

FIG. 3 is a circuit diagram of an energy storage apparatus for railway trains according to an embodiment of the present invention.
In an automatic tuning method based on an energy storage system for railway trains according to the embodiment of the present invention, optimal tracking of changes in overhead line voltage, which varies with time and according to substation voltage variation and a train operation pattern, is automatically performed to maximize energy storage efficiency.
Hereinafter, an electric dual layer capacitor is referred to as an EDLC for short.
The energy storage apparatus according to a preferred embodiment of the present invention includes a charging unit 10, a filter unit 20, a bidirectional DC/DC converter 30, a DC/DC filter 40, a storage unit 50, a controller 60, a current detector 70, and a voltage detector 80.
Since the bidirectional DC/DC converter 30 self-oscillates at high frequencies in a range of tens of kHz to hundreds of kHz to increase or decrease voltage, there is a need to provide a filter to prevent high frequency noise generated by transistors, FETs, or the like from being output through input and output power lines.
Although the filter unit 20 includes an inductor 21 that is connected in series to the circuit of the energy storage apparatus and a capacitor 22 that is connected in parallel to the circuit in this embodiment, the filter unit 20 may be replaced with any equivalent circuit which removes high frequency noise.
According to a preferred embodiment, the filter unit 20 which serves to block passage of high frequency noise includes a capacitor. A small-capacitance capacitor causes no significant problem since it takes a long time to fully charge the capacitor. However, a large-capacitance capacitor has a risk of causing excess current since the capacitor is almost equivalent to a short circuit until the capacitor is charged to some extent such that the amount of current flowing through the capacitor is reduced below a certain level. Since such excess current may cause significant problems in a neighbor system, the energy storage apparatus needs to include a protective circuit. The charging unit 10 serves as such a protective circuit.

When the charge switch 13 is off, a resistor 15 of the charging unit 10 prevents excess current from flowing. The charge switch 13 is turned on after the capacitor 22 is fully charged.

Impedance 11 of the charging unit 10 serves to achieve circuit impedance matching and may be selected as needed. A block switch 12 serves to block power in the system, separately from a fast blocker 5.

The bidirectional DC/DC converter 30 bidirectionally converts a DC voltage to a specific DC voltage while switching a first transistor 31 and a second transistor 32 through Pulse Width Modulation (PWM) control. Capacitors 33 and 34 are provided in parallel for the first transistor 31 and the second transistor 32 to prevent an increase in current spike that may occur when the transistors switch on and off at a high frequency in a range of tens of KHz to hundreds of KHz. The bidirectional DC/DC converter 30 operates as a buck converter when the first transistor 31 is on and the second transistor 32 is off and operates as a boost converter when the first transistor 31 is off and the second transistor 32 is on. Here, it is preferable that the first transistor and the second transistor be controlled with a phase difference of 180 degrees in order to control bidirectional power flow. In this case, the second transistor serves as a main switch.

The DC/DC filter 40 prevents a number of problems from occurring due to high frequency noise that flows into neighbor devices as described above with reference to the filter unit 20. Although an inductor 41 is used as the DC/DC filter 40 in this embodiment, the inductor 41 may be replaced with any other circuit that functions the same as the DC/DC filter 40.

The storage unit 50 includes a number of EDLCs 53 that are connected in parallel and store regenerative power that is received through the bidirectional DC/DC converter 30. A storage time of the storage unit 50 is determined according to the capacitance of the capacitor.

The storage unit 50 includes a switch 51 and a resistor 52 that are used to forcibly (or manually) consume power stored in the capacitor.

The current detector 70 measures current flowing into the filter unit 20 and outputs the measured current to the controller 60 and the voltage detector 80 measures voltage applied across both ends of the capacitor 22 of the filter unit 20 (i.e., voltage of an overhead line 1) and outputs the measured voltage to the controller 60. The supercapacitor monitoring unit 90 measures the voltage and the charged level of the EDLCs 53 and outputs the same to the controller 60. The supercapacitor monitoring unit 90 measures the voltage, charged level, and the like of the EDLCs 53 of the storage unit 50 and outputs the same to the controller 60.

The controller 60 may include a microprocessor or a general computer system.

A reference voltage that is applied to urban railway, subway, or light-rail trains in Korea is mostly 1500V or 750V. A reference voltage for storing regenerative power is set to be higher than the applied voltage and a reference voltage for supplying regenerative power back to the overhead line is set to be less than the applied voltage. For example, the controller 60 is configured as follows when the applied voltage is set to 1500V, the reference voltage for storing regenerative power is set to 1800V which is higher than the applied voltage, and the reference voltage for supplying regenerative power is set to 1000V which is less than the applied voltage.

The controller 60 receives the measured voltage of the overhead line 1 from the voltage detector 80 and outputs a control signal for switching the first transistor 31 on to switch the operating mode to a charge mode when the measured voltage of the overhead line 1 is equal to or higher than 1800V. Here, the bidirectional DC/DC converter 30 operates as a buck converter.

When the measured voltage of the overhead line 1 is equal to or less than 1000V, the controller 60 outputs a control signal for switching the first transistor 31 off and switching the second transistor 32 on. Here, the bidirectional DC/DC converter 30 operates as a boost converter.

In this embodiment, the controller 60 outputs a control signal according to a PWM scheme. A detailed description of the PWM control method is omitted herein since it is well known in the art.

In the case in which the supercapacitor monitoring unit 90 outputs a signal indicating that the storage unit 50 is fully charged, the operating mode is not switched to the charge mode even when the overhead line voltage is equal to or higher than 1800V which is the reference voltage for regenerative power storage and the operating mode is not switched to the power supply mode when the voltage of the storage unit 50 measured by the supercapacitor monitoring unit 90 is equal to or less than 1000V which is the reference voltage for regenerative power supply.

The controller 60 of the energy storage system for railway trains according to an embodiment of the present invention includes an initial charge controller for initial constant-current charging of supercapacitors and a power controller 110 for stabilizing overhead line power using regenerative energy that is generated upon powering up or braking of the train after initial charging is completed. Each of the initial charge controller and the power controller 110 is designed as a PI-PI dual loop controller.

As a controller for initially charging supercapacitors, the initial charge controller includes a soft start controller for preventing surge current according to a dv/dt component when the supercapacitors have been fully discharged, a current controller for constant-current control, and a voltage controller for controlling duty ratio according to an output value from the current controller.

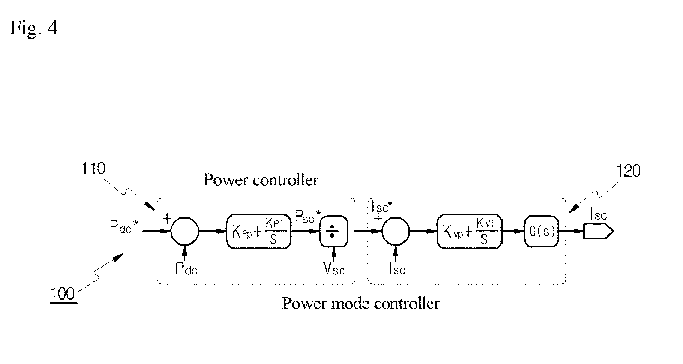

FIG. 4 illustrates a simplified configuration of a power mode controller to which the present invention is applied. In a power mode, the current controller 120 is present in an inner loop unlike in an initial charge mode and has a break frequency higher than that of the power controller 110 which is present in an outer loop.

In the power mode, the power controller 110, which is present in the outer loop, controls power of the DC link terminal such that an actual impedance value of the DC link terminal matches a target impedance value thereof **to compensate for an error value**.

A system transfer function of the power controller 110 is calculated as shown in Equation (2) using a relation of Equation (1).

(Equation 1)

$$P_{dc} \# P_{sc} = \frac{1}{2} C_{sc} V_{sc}^2 = V_{sc} I_{sc}$$

(Equation 2)

$$G(s) = \frac{P_{sc}(s)}{I_{sc}(s)} = V_{sc}(s) = \frac{1}{s C_{sc}}$$

Functions and operations of the energy storage system for railway trains according to an embodiment of the present invention are described below in detail with reference to the drawings.

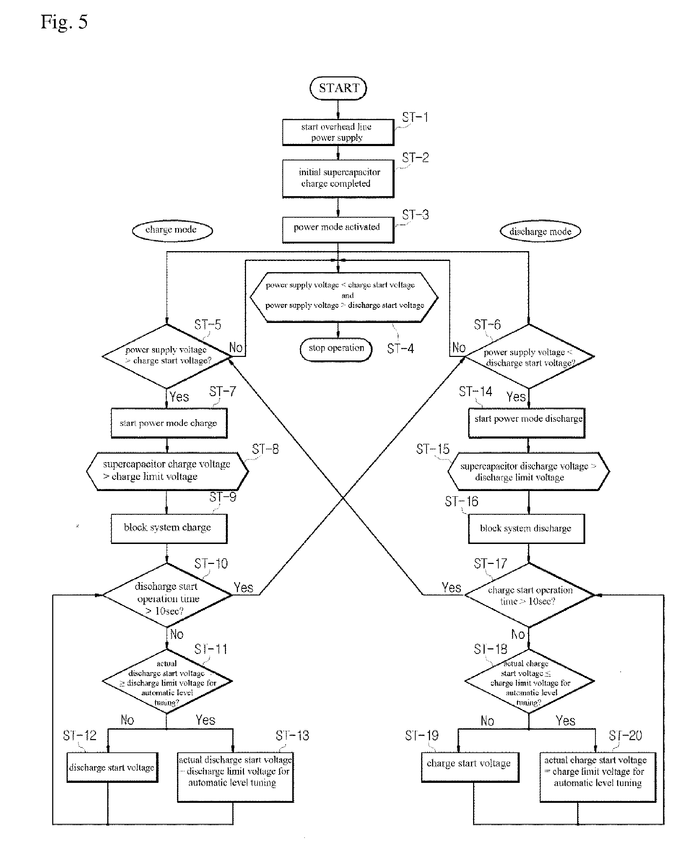

FIG. 5 is a flowchart illustrating automatic tuning based on the energy storage system for railway trains according to an embodiment of the present invention.

Generally, the energy storage system and controller have been designed initially based on a home environment in which overhead line power is uniform. However, practically, such an ideal overhead line condition does not exist anywhere in the world. That is, when charge and discharge are performed, it is necessary to take into consideration the range of variation of overhead line voltage and variation of charge and discharge start and maintenance voltages due to such overhead line voltage variation.

Variation of the output voltage of the substation rectifier needs to be closely analyzed and the energy storage system should not be charged with substation power. In addition, an excessively high discharge start voltage should not be selected for normal or regular discharge.

If the charge and discharge start voltages of the energy storage system are fixed, the amount of discharge of supercapacitors may become larger or smaller than the amount of charge of supercapacitors according to variation of substation power and train operation such that the supercapacitors are in an excessive charge or discharge state, resulting in a reduction in energy saving efficiency.

Because of this, there is a need to provide automatic tuning based on an energy storage system for railway trains according to the embodiment of the present invention. In the automatic tuning method for the energy storage system for railway trains according to the embodiment of the present invention, charge and discharge start voltages of the energy storage system are not fixed to specific levels while **the overhead line voltages** are monitored in real time and changes of the **overhead line voltages** are applied to control such various voltages in an associated manner.

Specifically, when a power mode is activated upon completion of initial charging of supercapacitors after overhead line begins to supply power, the energy storage system for railway trains according to an embodiment of the present invention compares charge and discharge start voltages with the power supply voltage and increases or decreases the charge and discharge start voltages in a stepwise manner and starts charge and discharge at the increased or decreased charge and discharge start voltages.

More specifically, the automatic tuning method based on the energy storage system for railway trains according to an embodiment of the present invention includes a first process in which the energy storage apparatus for railway trains starts operation, a second process in which initial charging of supercapacitors in the energy storage apparatus is completed and a power mode is activated, a third process in which one of a charge mode or a discharge mode is selected, a fourth process in which a power charge or discharge mode is initiated or the energy storage apparatus stops operation, a fifth process in which whether or not a condition for switching between the charge and discharge modes is satisfied is determined, a sixth process in which the charge and discharge modes are switched upon determining that the condition for switching between the charge and discharge modes is satisfied, a seventh process in which whether or not a condition for voltage maintenance or automatic tuning is satisfied is determined upon determining that the condition for switching between the charge and discharge modes is not satisfied, and an eighth process in which a voltage maintenance or automatic tuning process is performed.

Here, the third process includes process ST-4 in which the energy storage apparatus stops operation when power supply voltage is lower or higher than the charge start voltage, process ST-5 in which whether or not the power supply voltage is higher than the charge start voltage is determined, process ST-7 in which power-mode charging is initiated when the power supply voltage is higher than the charge start voltage, process ST-6 in which whether or not the power supply voltage is higher than a discharge start voltage is determined, and process ST-14 in which power-mode discharge is initiated when the power supply voltage is higher than the discharge start voltage.

The fourth process further includes process ST-8 or ST-15 in which whether or not a supercapacitor charge or discharge voltage is higher than a charge or discharge limit voltage is determined, and process ST-9 or ST-16 in which system charge or discharge is blocked when the supercapacitor charge or discharge voltage is higher than the charge or discharge limit voltage.

The fifth process includes switching from the current mode to the discharge mode when a discharge start operation time in the charge mode is longer than 10s and switching from the current mode to the charge mode when a charge start operation time in the discharge mode is shorter than 10s.

The seventh process includes process ST-11 in which whether or not an actual discharge start voltage in the charge mode is greater than or equal to a discharge limit voltage for automatic level tuning is determined and process ST-18 in which whether or not an actual charge start voltage in the discharge mode is greater than or equal to a charge limit voltage for automatic level tuning is determined.

The eighth process includes process ST-13 in which the actual discharge start voltage is set as a discharge limit voltage for automatic level tuning when the actual discharge start voltage in the charge mode is greater than or equal to the discharge limit voltage for automatic level tuning, process ST-12 in which the discharge start voltage is updated to a higher level when the actual discharge start voltage is less than the discharge limit voltage for automatic level tuning, process ST-20 in which the actual charge start voltage is set as a charge limit voltage for automatic level tuning when the actual charge start voltage in the discharge mode is less than or equal to the charge limit voltage for automatic level tuning, and process ST-12 in which the discharge start voltage is updated to a lower level when the actual charge start voltage is higher than the charge limit voltage for automatic level tuning.

As a result, the energy storage system according to the embodiment of the present invention can maximize energy storage system efficiency by increasing the number of times charge and discharge is performed using such an automatic tuning algorithm.

- Charge and discharge algorithm used before automatic tuning scheme is applied

The charge and discharge algorithm before automatic tuning is applied sets the charge and discharge start voltages, charge and discharge maintenance voltages, and charge and discharge reset voltages to fixed values under the assumption that the overhead line voltage is kept at 1625V when load is not present. Overhead line voltages are measured upon powering up and regenerative braking of the train and such voltages at which charge and discharge can be smoothly performed on average are determined as setting values of the charge and discharge start, maintenance voltage, and reset voltages. For example, setting values of the charge and discharge start, maintenance voltage, and reset voltages are determined as follows.

During Charge

Charge start voltage: non-load overhead line voltage + 30V = 1655V
Charge reset voltage: non-load overhead line voltage + 15V = 1640V
Charge maintenance voltage: non-load overhead line voltage + 20V = 1645V

During Discharge

Discharge start voltage: non-load overhead line voltage - 9V = 1616V
Discharge reset voltage: non-load overhead line voltage - 0V = 1625V
Discharge maintenance voltage: non-load overhead line voltage - 5V = 1620V

- Algorithm when automatic tuning scheme is applied

The algorithm used when automatic tuning is applied (which is also referred to as an automatic tuning algorithm) calculates setting values associated with charge and discharge in the same manner as the algorithm used before the automatic tuning scheme is applied, with the difference being that the automatic tuning algorithm detects a non-load overhead line voltage and applies the non-load overhead line voltage in a varying manner. However, it is very difficult for a processor to detect and determine a non-load overhead line. The current automatic tuning scheme determines a non-load voltage in the following manner. First, an initial non-load voltage is defined as 1625V. If the energy storage apparatus fails to perform discharge for a predetermined time while in an over-charge state, the non-load voltage is increased by 5V every 20s to enable discharge to be performed even at low powering-up energy (or low consumed energy). Similarly, if the energy storage apparatus fails to perform charge for a predetermined time while in an over-discharge state, the non-load voltage is decreased by 5V every 20s to enable charging to be performed even with low regenerative (or regenerated) energy. If the non-load voltage is set too high or too low, the energy storage apparatus enters an over-discharge state or an over-charge state and, from such setting values, it is possible to determine a non-load overhead line voltage during charge and discharge.

From actual experiments, we found that a non-load voltage can be estimated through up to 2 tuning processes associated with charge and discharge. We also found that the number of times charge and discharge is performed was increased by about 600 per day on average and power (or voltage) supplied from supercapacitors is increased by about 1.5 times when the same current limit value is applied.

- During Charge

Charge start voltage: non-load overhead line voltage + 30V = 1655V
Charge reset voltage: non-load overhead line voltage + 15V = 1640V
Charge maintenance voltage: non-load overhead line voltage + 20V = 1645V

During Discharge

Discharge start voltage: non-load overhead line voltage - 9V = 1616V
Discharge reset voltage: non-load overhead line voltage - 0V = 1625V
Discharge maintenance voltage: non-load overhead line voltage - 5V = 1620V

The following Table 2 illustrates charge and discharge conditions and supercapacitor charge and discharge limit voltages and currents of the energy storage system according to an embodiment of the present invention, where current that can flow into supercapacitors is limited to 200A.

[Table 2]

| Classification | When automatic level tuning is not applied | When automatic level tuning is applied |
|---|---|---|
| Charge start voltage | 1660V | 1645-1660V |
| Discharge start voltage | 1615V | 1615-1624V |
| Supercapacitor over-charge limit voltage | 1050V | 1050A |

(continued)

| Classification | When automatic level tuning is not applied | When automatic level tuning is applied |
| --- | --- | --- |
| Supercapacitor over-discharge limit voltage | 450V | 450A |
| Supercapacitor charge/discharge current limit | 200V | 200A |

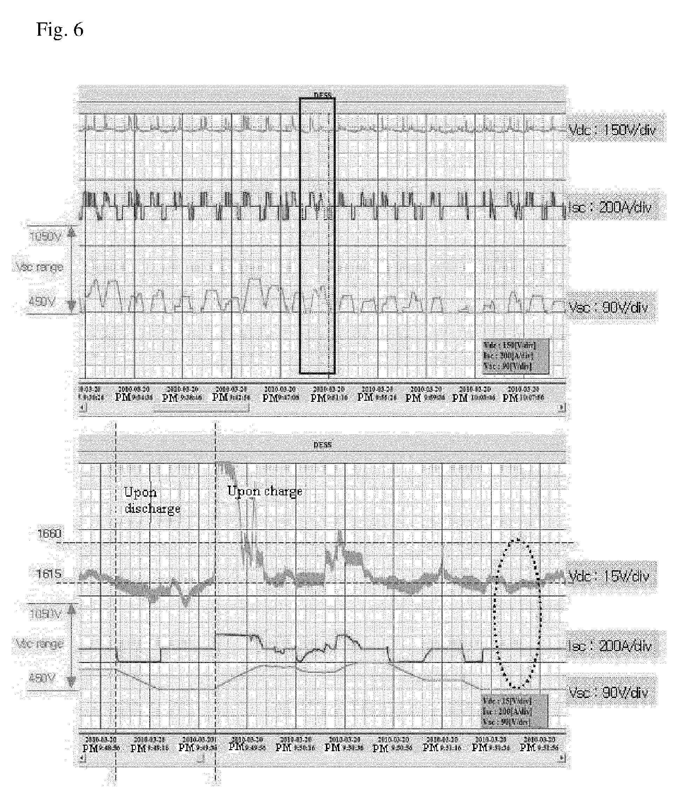

FIG. 6 is an operation test diagram illustrating an over-discharge state when automatic tuning based on the energy storage system for railway trains according to an embodiment of the present invention is not applied.

Specifically, FIG. 6 illustrates charge and discharge waveforms of the energy storage system when automatic tuning is not applied. In the example of FIG. 6, the supercapacitor-side portion of the apparatus operates in an over-discharge region since overall overhead line voltage is low. As can be seen from enlarged waveforms in FIG. 6, after the supercapacitor over-discharge level of 450V is reached, discharge is not performed even after the overhead line voltage reaches 1615V which is the discharge start voltage. This occurs when the apparatus operates while the normal overhead line voltage is low.

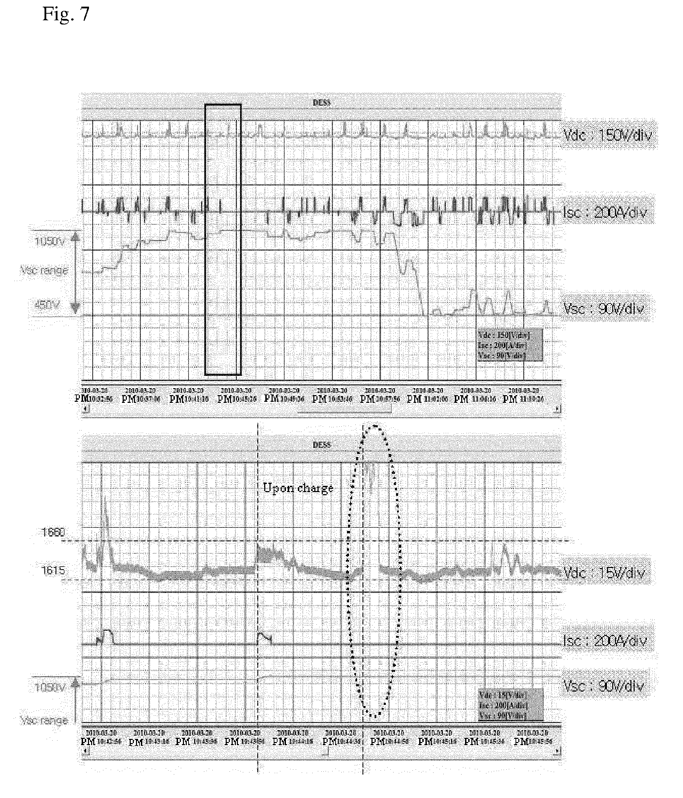

FIG. 7 is an operation test diagram illustrating an over-charge state when automatic tuning based on the energy storage system for railway trains according to an embodiment of the present invention is not applied.

Specifically, FIG. 7 illustrates charge and discharge waveforms of the energy storage system when automatic tuning is not applied. In the example of FIG. 7, the supercapacitor-side portion of the apparatus operates in an over-charge region since overall overhead line voltage is high. As can be seen from enlarged waveforms in FIG. 7, charge starts when the overhead line voltage exceeds 1660V which is the charge start voltage.

However, since the normal overhead line voltage is high, after the overhead line voltage reaches the supercapacitor over-charge level 1050V, the overhead line voltage does not drop below the discharge start voltage 1615V such that discharge is not performed even upon powering up of the train. Accordingly, it can be seen that, even when regenerative power is generated, the regenerative power cannot be used to perform charge until the overhead line voltage is reduced below the discharge start voltage according to variation of substation output or train operation.

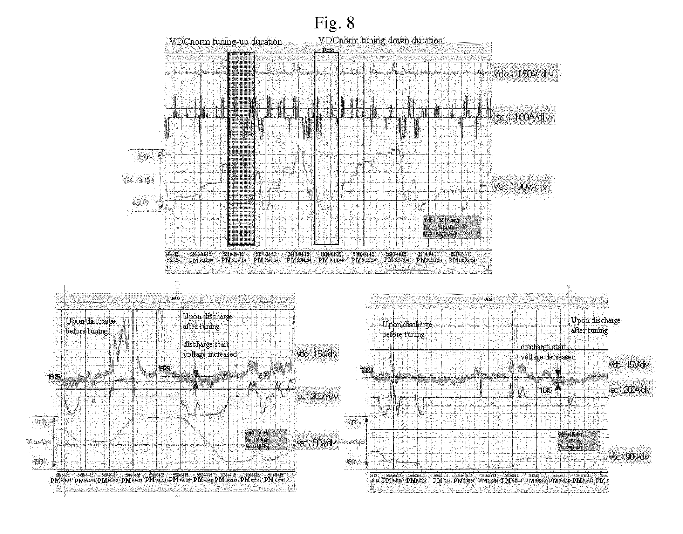

FIG. 8 is a test diagram illustrating operation states when automatic tuning based on the energy storage system for railway trains according to an embodiment of the present invention is applied.

Specifically, FIG. 8 illustrates waveforms when an automatic charge and discharge level tuning algorithm is applied. As can be seen from enlarged waveforms in FIG. 8, if a charge operation is not performed for a predetermined time while the supercapacitors are in an over-discharge state according to variation of substation output and train operation, it is determined that the normal overhead line voltage is low and the charge start voltage is increased in a stepwise manner and charge starts at the increased charge start voltage.

On the other hand, if a discharge operation is not performed for a predetermined time while the supercapacitors are in an over-charge state, it is determined that the normal overhead line voltage is high and the discharge start voltage is increased in a stepwise manner and discharge starts at the increased charge start voltage.

The energy storage system for railway trains according to the embodiments of the present invention is expected to improve the effects of a reduction in power costs of an urban railway operation institution using regenerative energy in the current high-oil price environment while achieving advantages such as stabilization of subway substation facility and overhead line power, a reduction in peak power, and a reduction in $CO_2$ gas emissions.

The present invention suggests an automatic charge and discharge level tuning algorithm which can achieve optimal energy reduction effects using a bidirectional DC/DC converter which can efficiently use regenerative energy of DC urban railways and can accomplish stabilization of overhead line voltage. We experimentally analyzed and proved the effects of the suggested method by applying the suggested method to a substation system of Daejeon urban railway Line 1 which is an actual DC urban railway system.

The present invention is also expected to maximize energy efficiency by charging and discharging energy while tracking unstable power, which is generated using renewable energy such as wind and solar energy, in real time by applying an automatic tuning algorithm to an energy storage system which is applied to a smart grid or a micro grid that uses renewable energy as a primary energy source.

The automatic tuning method based on an energy storage system for railway trains according to the present invention is not limited to the above embodiments and may be modified in various ways without departing from the spirit of the present invention.

**Claims**

1. An automatic tuning method based on an energy storage system for railway trains, the automatic tuning method comprising:

a first process in which an energy storage apparatus for railway trains starts operation;
a second process in which initial charging of supercapacitors in the energy storage apparatus is completed and a power mode is activated;
a third process in which one of a charge mode or a discharge mode is selected;
a fourth process in which a power charge or discharge mode is initiated or the energy storage apparatus stops operation;
a fifth process in which whether or not a condition for switching between the charge and discharge modes is satisfied is determined;
a sixth process in which the charge and discharge modes are switched upon determining that the condition for switching between the charge and discharge modes is satisfied;
a seventh process in which whether or not a condition for voltage maintenance or automatic tuning is satisfied is determined; and
an eighth process in which a process for voltage maintenance or automatic tuning is performed.

2. The automatic tuning method according to claim 1, wherein the third process includes:

a process in which the energy storage apparatus stops operation when power supply voltage is lower or higher than a charge start voltage;
a process in which whether or not the power supply voltage is higher than the charge start voltage is determined;
a process in which power-mode charging is initiated when the power supply voltage is higher than the charge start voltage;
a process in which whether or not the power supply voltage is higher than a discharge start voltage is determined; and
a process in which power-mode discharge is initiated when the power supply voltage is higher than the discharge start voltage.

3. The automatic tuning method according to claim 1, wherein the fourth process further includes:

a process in which whether or not a supercapacitor charge or discharge voltage is higher than a charge or discharge limit voltage is determined; and
a process in which system charge or discharge is blocked when the supercapacitor charge or discharge voltage is higher than the charge or discharge limit voltage.

4. The automatic tuning method according to claim 1, wherein the fifth process includes:

switching from a current mode to the discharge mode when a discharge start operation time in the charge mode is longer than 10s; and
switching from the current mode to the charge mode when a charge start operation time in the discharge mode is shorter than 10s.

5. The automatic tuning method according to claim 1, wherein the seventh process includes:

a process in which whether or not an actual discharge start voltage in the charge mode is greater than or equal to a discharge limit voltage for automatic level tuning is determined; and
a process in which whether or not an actual charge start voltage in the discharge mode is greater than or equal to a charge limit voltage for automatic level tuning is determined.

6. The automatic tuning method according to claim 1, wherein the eighth process includes:

a process in which the actual discharge start voltage is set as a discharge limit voltage for automatic level tuning when the actual discharge start voltage in the charge mode is greater than or equal to the discharge limit voltage for automatic level tuning;
a process in which the discharge start voltage is updated to a higher level when the actual discharge start voltage is less than the discharge limit voltage for automatic level tuning;

a process in which the actual charge start voltage is set as a charge limit voltage for automatic level tuning when the actual charge start voltage in the discharge mode is less than or equal to the charge limit voltage for automatic level tuning; and

a process in which the discharge start voltage is updated to a lower level when the actual charge start voltage is higher than the charge limit voltage for automatic level tuning.

Fig.1

overhead line voltage variation range
1612~1640[V]

Fig. 2

**Fig. 3**

Fig. 4

Fig. 5

Fig. 6

Fig. 7

Fig. 8